# EUROPÄISCHE PATENTSCHRIFT

(11) **EP 3 101 745 B1**
(45) Veröffentlichungstag und Bekanntmachung des Hinweises auf die Patenterteilung: **04.10.2017**
(21) Anmeldenummer: 15170439.2
(22) Anmeldetag: 03.06.2015
(51) Int. Cl.: H02B 1/20, H01H 71/08

(54) **MEHRPHASIGE SAMMELSCHIENE MIT VERBESSERTER KRIECHSTRECKE**
MULTIPHASE BUSBAR WITH IMPROVED CREEPAGE DISTANCE
UN JEU DE BARRES OMNIBUS MULTI-PHASES AVEC UNE MEILLEURE LIGNE DE FUITE

(43) Veröffentlichungstag der Anmeldung: 07.12.2016
(73) Patentinhaber: Friedrich Göhringer Elektrotechnik GmbH, 78098 Triberg (DE)
(72) Erfinder: Maninchedda, Patrice, 62820 Libercourt (FR); Brütsch, Friedbert Gerwin, 78532 Tuttlingen (DE)
(74) Vertreter: Westphal, Mussgnug & Partner Patentanwälte mbB

(56) Entgegenhaltungen:
- EP-A1- 1 137 034
- DE-B4-102010 007 250
- FR-A1- 2 849 294
- US-A1- 2012 149 225

## Beschreibung

Die Erfindung betrifft eine Phasenschiene gemäß den Merkmalen des Oberbegriffs des Anspruchs 1.

Phasenschienen dienen der zentralen Verteilung von elektrischer Energie. Herkömmliche Phasenschienen weisen eine im Wesentlichen U-förmige Isolierung auf, in der parallel zueinander Leiter angeordnet sind. Die Leiter sind über innerhalb der Isolierung parallel zueinander angeordnete Trennwände voneinander isoliert. Die Leiter weisen Anschlussfahnen zur Verbindung mit den elektrischen Geräten auf. Üblicherweise weist die Schiene entweder zwei oder vier Leiter auf, wobei ein erster Leiter ein Neutralleiter N mit N-Anschlussfahnen ist und die anderen Leiter Phasenleiter P mit P-Anschlussfahnen sind. Solche Phasenschienen sind beispielweise aus DE 10 2010 007 250 B4 bekannt.

Bekannt sind auch aus EP 1 137 034 A1 Phasenschienen, die eine Isolierung mit isolierenden Kappen zum Schutz der N-Anschlussfahnen aufweist. Die Kappen sind zusammen mit der Isolierung in einem Spritzgussverfahren hergestellt.

Es wird an den bekannten Anschlussklemmen als nachteilig empfunden, dass der Elektriker beim Kürzen der Phasenschiene, um die gewünschte Länge zu erreichen, die Leiter aus der Isolierung herausnehmen und separat kürzen muss. Nur so können ausreichende Kriechstrecken gewährleistet werden. Dies ist aber besonders aufwendig. Außerdem ist die Anordnung der N- und P-Anschlussfahnen in einer Längsrichtung vom Land abhängig. Beispielweise ist die erste Anschlussfahne in der Längsrichtung von links nach rechts in Deutschland eine N-Anschlussfahne und in Australien eine P-Anschlussfahne. Herkömmliche Phasenschienen können hierfür dafür nicht flexibel angepasst werden, so dass die Phasenschienen abhängig vom Land hergestellt werden müssen, was aber zu hohen Kosten führt. Dies ist insbesondere der Fall, wenn die Isolierung als Spritzgussteil gefertigt wird. Dann müssen abhängig vom Land und von der gewünschten Länge verschiedene Forme für die Isolierung hergestellt werden.

Die Aufgabe der Erfindung besteht daher darin, eine Phasenschiene bereitzustellen, die diese Nachteile nicht aufweist und die einfach und flexibel in ihrer Herstellung bleibt.

Diese Aufgabe wird durch eine Phasenschiene mit den Merkmalen des Anspruchs 1 gelöst.

Weiterbildungen der Erfindung sind Gegenstand der Unteransprüche.

Die erfindungsgemäße Phasenschiene weist eine Isolierung und mindestens zwei Leiter auf, die in der Isolierung angeordnet sind und Anschlussfahnen aufweisen. Außerdem weist die Isolierung eine Bodenwand und Trennwände, die die Leiter voneinander trennen, auf. Erfindungsgemäß weisen die Leiter Anformungen auf, die einen Abstand zwischen einem Grundkörper der Leitern und der Bodenwand der Isolierung schaffen.

Damit berühren die Leiter die Bodenwand der Isolierung nur an diesen Anformungen, so dass der Kriechweg zwischen zwei Berührungspunkte an der Bodenwand besonders lang ist. Das ist insbesondere wichtig beim Abschneiden der Phasenschiene, da die Kriechstrecke dadurch immer ausreichend lang bleiben kann. Damit braucht also der Elektriker beim Kürzen der Phasenschiene die Leiter nicht mehr aus der Isolierung herauszunehmen, um diese separat zur Vergrößerung der Kriechstrecke abzulängen.

Vorzugsweise ist ein erster Leiter ein Neutralleiter mit N-Anschlussfahnen und ein zweiter Leiter ein Phasenleiter mit P-Anschlussfahnen, wobei in einem Längsschnitt die N-Anschlussfahnen und die P-Anschlussfahnen je nach Einsatz links oder rechtsseitig ausbildbar sind.

Gemäß einer besonders vorteilhaften Ausgestaltung ist an der Isolierung ein Kunststoffteil angeordnet, das Anformungen zur Aufnahme eines Abschnitts jeder Anschlussfahne aufweist. Das Kunststoffteil dient der Positionierung der Anschlussfahnen. Dazu können die Anschlussfahnen sicher von unten angeschlossen werden.

Da die Isolierung und das Kunststoffteil separate Teile sind, können sie in zwei separaten Herstellungsverfahren hergestellt werden. Insbesondere kann die Isolierung als Strangpressprofil hergestellt werden, während das Kunststoffteil als Spritzgussteil hergestellt wird. Das Strangpressprofil hat den Vorteil, dass es günstig und endlos hergestellt werden kann. Mit dem Spritzgussteil können kompliziertere Formen hergestellt werden. Die Kombination eines Strangpressprofils mit einem Spritzgussteil bietet daher eine hohe Flexibilität für die Herstellung einer Phasenschiene. Außerdem kann abhängig von der Anordnung des Kunststoffteils an der Isolierung die erste Anschlussfahne in einer Längsrichtung eine N- oder eine P-Anschlussfahne sein.

Vorzugsweise sind die Anformungen an den Leitern als Verlängerung je einer Anschlussfahne in Richtung der Bodenwand der Isolierung ausgebildet. Damit bleibt die Kriechstrecke zwischen zwei Berührungspunkte an der Bodenwand optimal lang, unabhängig von dem Ort, an dem die Schiene abgeschnitten wird.

Es ist besonders vorteilhaft, wenn die Trennwände Anformungen aufweisen, die einen Abstand zwischen den Leitern und einem Körper der Trennwände schaffen. Insbesondere können die Anformungen der Trennwände die Leiter nur an deren Anschlussfahnen berühren. Damit ist die Kriechstrecke zwischen zwei Berührungspunkte besonders lang, was beim Kürzen der Phasenschiene sehr wichtig ist. Insgesamt liegen die Kontaktpunkte nur zwischen den Anschlussfahnen der Leiter und den Anformungen der Trennwände und zwischen den Anformungen der Leiter und der Bodenwand der Isolierung.

Vorzugsweise sind in einem Querschnitt die Anformungen der Trennwände dachförmig ausgebildet. Damit kann die Kriechstrecke zwischen zwei Berührungspunkte noch verlängert werden. Solche dachförmige Anformungen sind beim Strangpressen besonders einfach herzustellen.

Die Grundkörper der Leiter können Rastnasen und die Isolierung Stege aufweisen, die die Rastnasen übergreifen können. Damit können die Leiter in der Isolierung positioniert und befestigt werden, so dass kein versehentliches Entnehmen der Leiter möglich ist

Vorzugsweise liegt jede Rastnase in der Verlängerung einer der Anschlussfahnen in der Richtung der Bodenwand der Isolierung. Damit bleiben die Leiter in der Isolierung befestigt, unabhängig davon, ob und wo die Phasenschiene abgekürzt worden ist.

Die Isolierung kann in einem Querschnitt Abschnitte zur Ausrichtung der Leiter aufweisen. Die Abschnitte können als Anlaufflächen ausgebildet sein. Beim Einsetzen wird dann der Leiter durch die Abschnitte bis zur Bodenwand der Isolierung geführt und zentriert.

Vorzugsweise ist die Isolierung ein Strangpressprofil. Damit kann sie günstig und in jeder Länge produziert werden.

Es ist besonders günstig, wenn die Anschlussfahnen gebogen, insbesondere doppelt abgekröpft ausgebildet sind. Damit ist das Anschließen der Anschlussfahnen besonders einfach und die Ausrichtung kann in zwei verschiedenen Ebenen erfolgen.

Vorzugsweise bestimmt das Kunststoffteil einen Abstand zwischen zwei benachbarten Anschlussfahnen. Dies vereinfacht den Anschluss an anderen elektrischen Geräten.

Insbesondere können die Anschlussfahnen und das Kunststoffteil so aufeinander abgestimmt sein, dass an jeder Anschlussfahne eine Einspeisungsklemme berührungssicher eingesetzt werden kann.

Vorzugsweise weist jede Anschlussfahne ein sich nach außen erstreckendes Ende auf und die Anschlussfahnen sind im Kunststoffteil so angeordnet, dass in einer Draufsicht die Enden je zwei benachbarter Anschlussfahnen quer zur Längsrichtung zueinander versetzt angeordnet sind. Diese Anordnung bietet einen besonders einfachen und sicheren Zugang für den Elektriker zu den Enden der Anschlussfahnen und eignet sich gut für den Anschluss an elektrischen Geräten.

Es ist besonders vorteilhaft, wenn in der Draufsicht von oben die Enden der Anschlussfahnen zumindest eines der Leiter außerhalb der Isolierung liegen. Damit ist der Zugang zu den Enden der Anschlussfahnen umso einfacher für den Elektriker, der beispielweise an die Anschlussfahnen Kabel zur Einspeisung anschließen kann.

Vorzugsweise ist das Kunststoffteil ein Spritzgussteil und kann damit das Spritzgussteil besonders einfach und kostengünstig hergestellt werden.

Gemäß einer besonders vorteilhaften Ausgestaltung weist die Schiene zwei Leiter auf, wobei ein erster Leiter ein Neutralleiter N mit N-Anschlussfahnen und ein zweiter Leiter ein Phasenleiter P mit P-Anschlussfahnen ist. Eine solche Schiene ist für einphasigen Wechselstrom geeignet.

Alternativ kann die Schiene vier Leiter aufweist, wobei ein erster Leiter ein Neutralleiter N mit N-Anschlussfahnen ist und die anderen Leiter Phasenleiter P mit P-Anschlussfahnen sind. Eine solche Schiene ist für dreiphasigen Drehstrom geeignet.

In einem Längsschnitt kann die erste Anschlussfahne von links nach rechts eine N-Anschlussfahne sein.

Alternativ kann sie eine P-Anschlussfahne sein.

Die Phasenschiene gemäß der vorliegenden Anmeldung wird nachfolgend anhand von mehreren Ausführungsbeispielen unter Bezugnahme auf die beigefügten Figuren nachfolgend näher erläutert. Es zeigen:
- Figur 1: eine perspektivische Ansicht eines Ausführungsbeispiels einer Phasenschiene,
- Figur 2: eine perspektivische Ansicht des Neutralleiters der Phasenschiene aus Figur 1
- Figur 3: eine perspektivische Schnittansicht der Phasenschiene aus Figur 1,
- Figur 4: eine Draufsicht von oben der Phasenschiene der Figur 1, und
- Figur 5: einen Querschnitt durch die Phasenschiene aus Figur 1.

In den nachfolgenden Figuren bezeichnen, sofern nicht anders angegeben, gleiche Bezugszeichen gleiche Teile mit gleicher Bedeutung.

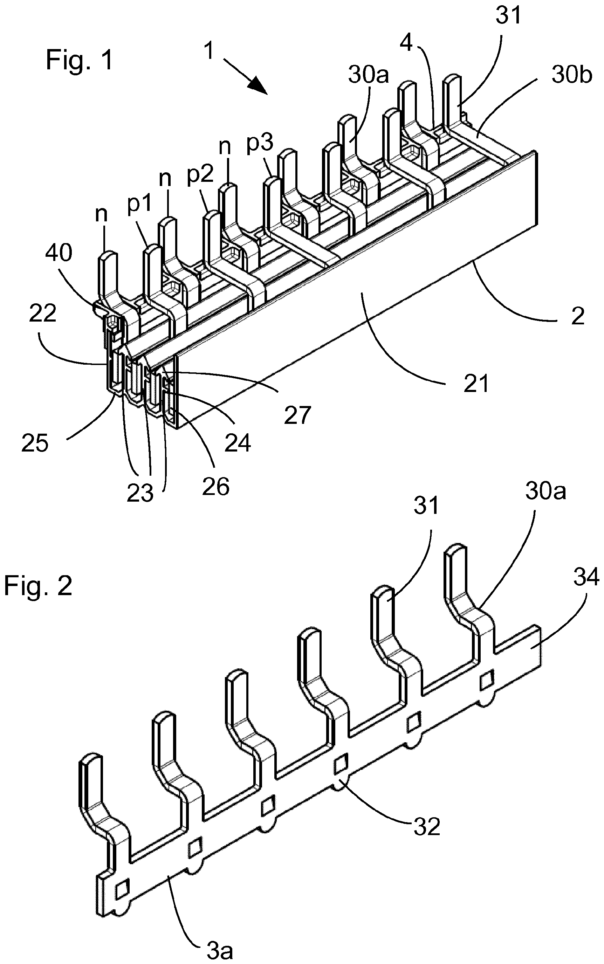

In Figur 1 ist eine perspektivische Ansicht eines Ausführungsbeispiels einer Phasenschiene 1 dargestellt. Die Phasenschiene 1 besteht aus einer im Wesentlichen U-förmigen Isolierung 2, drei in der Isolierung 2 angeordneten Leitern 3 sowie einem Kunststoffteil 4. Im vorliegenden Beispiel ist die Isolierung 2 ein Stangpressprofil, das einfach und kostengünstig herzustellen ist, und das Kunststoffteil 4 ein Spritzgussteil.

Die Isolierung 2 weist eine vordere Wand 21, eine hinteren Wand 22, eine Bodenwand 25 sowie drei zwischen der vorderen Wand 21 und der hinteren Wand 22 angeordneten Trennwänden 23 auf. Die vordere Wand 21, die hintere Wand 22 und die Trennwände 23 verlaufen parallel zueinander, so dass vier Führungskammern 26 in der Isolierung 2 gebildet sind. In jeder Führungskammer 26 ist einer der Leiter 3a, 3b mit einem parallel zu den Wänden 21, 22, 23 verlaufenden Grundkörper 34 und daran angeordneten, nach außen gerichteten Anschlussfahnen 30a, 30b angeordnet. Die Anschlussfahnen 30a, 30b sind doppelt abgekröpft ausgebildet. Insbesondere weisen die Anschlussfahnen 30a, 30b einen ersten Abschnitt, der nach oben in Verlängerung des Grundkörpers 34 verläuft, einen zweiten Abschnitt, der senkrecht zu dem ersten Abschnitt und zu den Wänden 21, 22, 23 verläuft, sowie ein sich nach oben erstreckendes, parallel zu dem ersten Abschnitt verlaufendes Ende 31 auf. Das Kunststoffteil 4 ist an der Isolierung 2, insbesondere an der hinteren Wand 22 der Isolierung 2 angeordnet und befestigt, und weist Anformungen 40, 41 zur Aufnahme eines Abschnitts der Anschlussfahnen 30a, 30b auf.

Im vorliegenden Ausführungsbeispiel ist der der hinteren Wand 22 am nächsten gelegenen Leiter 3a ein Neutralleiter n mit N-Anschlussfahnen 30a, während die weiteren drei Leiter 3b Phasenleiter p1, p2, p3 mit P-Anschlussfahnen 30b sind, so dass die vorliegende Phasenschiene 1 für dreiphasigen Drehstrom geeignet ist. Es ist auch denkbar, dass die Phasenschiene nur einen Phasenleiter aufweist, und damit für einphasigen Wechselstrom geeignet ist, und/oder dass der Neutralleiter an der vorderen Wand liegt.

Figur 2 zeigt eine perspektivische Ansicht des Neutralleiters n der Phasenschiene 1. Der Leiter n weist einen Grundkörper 34, der als Schiene ausgebildet ist, die schon erwähnten Anschlussfahnen 30a sowie halbkreisförmige oder trapezförmige Anformungen 32 auf. Der Leiter 3a ist typischerweise aus einem Metall wie Kupfer ausgebildet. Die Anformungen 32 sind als Verlängerung je einer der Anschlussfahnen 30a, 30b in Richtung der Bodenwand 25 der Isolierung 2 ausgebildet. Die weitere Leiter 3b sind genauso ausgebildet.

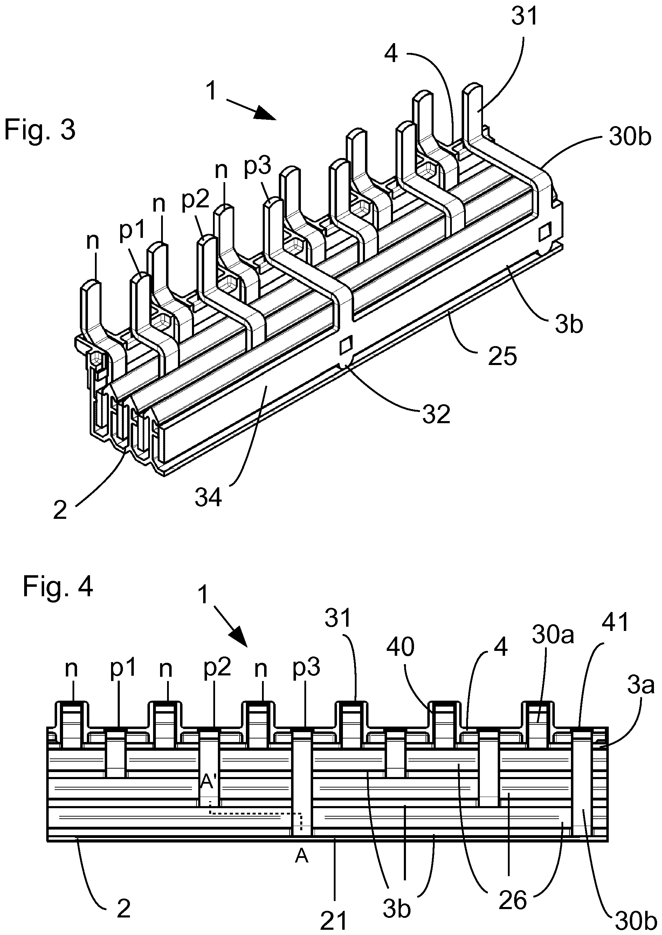

Figur 3 stellt eine Schnittansicht der Ansicht der Figur 1 dar, so dass die Vorderwand 21 der Isolierung 2 nicht mehr sichtbar ist. Wie in Figur 2 sichtbar berührt der Phasenleiter 3b die Bodenwand 25 nur mit seinen Anformungen 32. Da beispielweise der Leiter 3b nur zwei Anschlussfahnen 30b aufweist, weist er auch nur zwei Anformungen 32 und daher nur zwei Berührungspunkte mit der Bodenwand 25 auf. Die Anformungen 32 schaffen also einen Abstand zwischen dem Grundkörper 34 des Leiters 3b und der Bodenwand 25 der Isolierung 2. In herkömmlichen Phasenschienen berührt der Leiter die Bodenwand auf der ganzen Länge der Bodenwand, so dass es keinen Abstand zwischen dem Grundkörper des Leiters und der Bodenwand gibt. Im Vergleich ist hier die Kriechstrecke zwischen zwei Leitern 3a, 3b in aneinander grenzenden Führungskammern entsprechend viel größer. Damit braucht der Elektriker, wenn er die Phasenschiene abschneidet braucht, nicht mehr, die Leiter 3a, 3b aus der Isolierung 2 herauszunehmen und einzeln zu kürzen, sondern kann die Phasenschiene insgesamt ablängen.

Figur 4 zeigt eine Draufsicht der Phasenschiene 1. Mit Draufsicht wird eine Sicht aus einer Ebene, die parallel zu der Ebene der Bodenwand 25 verläuft und höher als die Phasenschiene 1 liegt, verstanden. Besonders sichtbar ist hier die Anordnung der Enden 31 der Anschlussfahnen 30a, 30b. Die Enden 31 der N-Anschlussfahnen 30a liegen in einer ersten Ebene und die Enden 31 der P-Anschlussfahnen 30b in einer zweiten Ebene. Diese zwei Ebenen liegen außerhalb einer Ebene des jeweiligen Leiters 3a, 3b der Anschlussfahnen 30a, 30b und verlaufen parallel zu den Wänden 21, 22, 23 der Isolierung 2. In der Draufsicht liegen die Enden 31 der N-Anschlussfahnen 30a des Neutralleiters 3a außerhalb der Isolierung 2. Die Enden 31 der N-Anschlussfahnen 30a sitzen nämlich in den Anformungen 40 des Kunststoffteils 4, die in der Draufsicht quer zur Längsrichtung über die Isolierung bzw. über deren hintere Wand 22 hinausragen. Außerdem sind die Anschlussfahnen 30a, 30b so angeordnet, dass in Längsrichtung die N-Anschlussfahnen 30a und die P-Anschlussfahnen 30b wie folgt wechseln: n - p1 - n - p2 - n - p3. Damit sind in der Draufsicht die Enden 31 je zwei benachbarten Anschlussfahnen 30a, 30b quer zur Längsrichtung zueinander versetzt angeordnet. In diesem Beispiel ist in der Längsrichtung die erste Anschlussfahne von links nach rechts eine N-Anschlussfahne 30a. Es ist auch möglich, die Leiter 3a, 3b in der Isolierung 2 so anzuordnen und/oder abzuschneiden, dass die erste Anschlussfahne eine P-Anschlussfahne 30b ist, indem der Elektriker beispielweise die erste Anschlussfahne abschneidet. Der Abstand zwischen zwei benachbarten Anschlussfahnen 30a, 30b wird durch das Kunststoffteil (4) vorgegeben. Mit dieser Anordnung hat ein Elektriker einen einfachen Zugang zu den Anschlussfahnen 30a, 30b und kann an beispielweise einen Kabel zur Einspeisung an die Anschlussfahnen 30a, 30b bequem und berührungssicher anschließen.

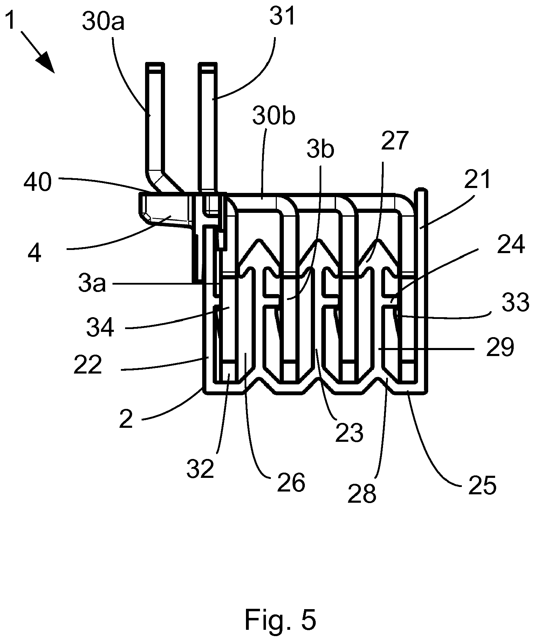

Figur 5 zeigt einen Querschnitt der Phasenschiene 1. In dieser Ansicht sind die Führungskammern 26 der Isolierung 2 deutlich zu erkennnen. Die Führungskammern 26 sind von zwei benachbarten Wänden 21, 22, 23 der Isolierung 2 gebildet und jeweils ein Leiter 3a, 3b ist in jeder Führungskammer 26 angeordnet. Die Grundkörper 34 der Leiter 3a, 3b verlaufen parallel zu den Wänden 21, 22, 23 der Isolierung 2. Die vordere Wand 21 und die hintere Wand 22 sind außerdem höher als die Trennwände 23 ausgebildet.

Zur Ausrichtung der Leiter 3a, 3b weist die Bodenwand 25 der Isolierung 2 Abschnitte 28 auf, die als Anlaufflächen ausgebildet sind und flache Abschnitte der Bodenwand 25 im Querschnitt seitlich begrenzen. Die Abschnitte 28 stellen damit im Querschnitt schräglaufende Übergänge von den flachen Abschnitten der Bodenwand 25 zu der Trennwände 23 dar. Beim Einsetzen werden die Leiter 3a, 3b durch die Anschnitte 28 ausgerichtet und zentriert, so dass die Leiter 3a, 3b die flache Abschnitte der Bodenwand 25 mit den Anformungen 32 berühren.

Die Grundkörper 34 der Leiter 3a, 3b weisen außerdem Rastnasen 33 auf. Die Isolierung 2 weist Stege 24 auf, die die Rastnasen 33 der Leiter 3a, 3b übergreifen. Die Stege 24 der Isolierung 2 liegen in einer parallel zu den Abschnitten 28 der Bodenwand 25 verlaufenden Ebene und auf der gleichen Höhe. Die Rastnasen 33 sind je zwischen einer der Anschlussfahnen 30a, 30b und der jeweiligen Anformung 32 angeordnet, so dass sie in der Verlängerung einer der Anschlussfahnen 30a, 30b in die Richtung der Bodenwand 25 der Isolierung 2 liegen und ein versehentliches Entnehmen der Leiter 3a, 3b verhindern.

Die Trennwände 23 weisen einen Körper 29 sowie eine dachförmige Anformung 27 auf, die an einem nach oben gerichteten Ende der Trennwand 23 liegt. Die Enden der Anformungen 27 sind höher als die Grundkörper 34 der Leiter 3a, 3b ausgebildet und berühren damit lediglich die Anschlussfahnen 30a, 30b, so dass der Kriechweg zwischen zwei benachbarten Leitern 3a, 3b größer ist. Insgesamt liegen die Kontaktpunkte zwischen einem Leiter 3a, 3b und der Isolierung 2 nur an Berührungspunkten zwischen den Anschlussfahnen 30a, 30b des Leiters 3a, 3b und den Anformungen 27 der Trennwände 23 und zwischen den Anformungen 32 des Leiters 3a, 3b und der Bodenwand 25 vor. In einer herkömmlichen Phasenschiene berührt ein Leiter die Isolierung entlang einer Linie an der Bodenwand. In diesem Fall ist also die Kriechstrecke zwischen zwei Leitern lediglich die Linie in einem Querschnitt, die die zwei Leiter entlang der Bodenwand verbindet. Im vorliegenden Fall ist aber die Kriechstrecke zwischen zwei Leitern 3a, 3b viel länger. Beispielweise ist auf Figur 4 eine Kriechstrecke A-A' zwischen dem Phasenleiter p3 und dem Phasenleiter p2 als gestrichelte Linie dargestellt. Die Kriechstrecke A-A' läuft zwischen einem der Berührungspunkte A des Phasenleiters p3 mit der Isolierung 2 und einem der Berührungspunkte A' des Phasenleiters p2 mit der Isolierung 2. Im Gegensatz zu der Kriechstrecke in einer herkömmlichen Phasenschiene verlängert sich die Kriechstrecke im vorliegenden Beispiel um den Abstand zwischen der Anschlussfahnen 30b der Phasenleiter p2 und p3, der durch das Kunststoffteil 4 bedingt ist. Die Kriechstrecke bleibt außerdem beim Kürzen der Phasenschiene immer gleich.

Das Kunststoffteil 4 sitzt auf der hinteren Wand 22 der Isolierung 2. Die Anformungen 40 für die N-Anschlussfahnen 30a sind als gebogene Hohlkörper ausgebildet, die im Querschnitt über die Isolierung 2 hinausragen und in denen je ein Abschnitt einer der N-Anschlussfahnen 30a festgehalten ist. Das Kunststoffteil 4 ist auf die Isolierung 2 einfach aufgesteckt und wird durch die darauf liegenden N-Anschlussfahnen 30a eingeklemmt. Die P-Anschlussfahnen 30b sind in den Anformungen 41 des Kunststoffteils 4 angeordnet aber berühren die Anformungen 41 nicht. Auf Figur 5 ist nochmal sichtbar, dass die Enden 31 der N-Anschlussfahnen 30a und die Enden 31 der P-Anschlussfahnen 30b jeweils in einer Ebene liegen, die parallel zu den Wänden 21, 22, 23 und versetzt zu der Ebenen der jeweiligen Leiter 3a, 3b verlaufen.

### Bezugszeichenliste

- 1: Phasenschiene
- 2: Isolierung
- 21: Vordere Wand
- 22: Hintere Wand
- 23: Trennwand
- 24: Steg
- 25: Bodenwand
- 26: Führungskammer
- 27: Anformung
- 28: Abschnitt
- 29: Körper
- 3a, 3b: Leiter
- 30a, 30b: Anschlussfahne
- 31: Ende
- 32: Anformung
- 33: Rastnase
- 34: Grundkörper
- 4: Kunststoffteil
- 40: Anformung
- 41: Anformung

## Patentansprüche

1. Phasenschiene (1) mit einer Isolierung (2) und mindestens zwei Leitern (3a, 3b), die in der Isolierung (2) angeordnet sind und Anschlussfahnen (30a, 30b) aufweisen, wobei die Isolierung (2) eine Bodenwand (25) und Trennwände (23), die die Leiter (3a, 3b) voneinander trennen, aufweist,
**dadurch gekennzeichnet, dass** die Leiter (3a, 3b) Anformungen (32) aufweisen, die einen Abstand zwischen einem Grundkörper (34) der Leiter (3a, 3b) und der Bodenwand (25) der Isolierung (2) schaffen.

2. Phasenschiene (1) nach Anspruch 1,
**dadurch gekennzeichnet, dass** ein erster Leiter (3a) ein Neutralleiter (n) mit N-Anschlussfahnen (30a) und ein zweiter Leiter (3b) ein Phasenleiter (p1, p2, p3) mit P-Anschlussfahnen (30b) ist, wobei in einem Längsschnitt die N-Anschlussfahnen (3a) und die P-Anschlussfahnen (3b) je nach Einsatz links oder rechtsseitig ausbildbar sind.

3. Phasenschiene (1) nach einem der Ansprüche 1 oder 2,
**dadurch gekennzeichnet, dass** an der Isolierung (2) ein Kunststoffteil (4) angeordnet ist, das Anformungen (40, 41) zur Aufnahme eines Abschnitts jeder Anschlussfahne (30a, 30b) aufweist.

4. Phasenschiene (1) nach einem der vorhergehenden Ansprüche,
**dadurch gekennzeichnet, dass** die Anformungen (32) als Verlängerung je einer der Anschlussfahnen (30a, 30b) in Richtung der Bodenwand (25) der Isolierung (2) ausgebildet sind.

5. Phasenschiene (1) nach einem der vorhergehenden Ansprüche,
**dadurch gekennzeichnet, dass** die Trennwände (23) Anformungen (27) aufweisen, die einen Abstand zwischen den Leitern (3a, 3b) und einem Körper (29) der Trennwänden (23) schaffen.

6. Phasenschiene (1) nach Anspruch 5,
**dadurch gekennzeichnet, dass** in einem Querschnitt die Anformungen (27) der Trennwände (23) dachförmig ausgebildet sind.

7. Phasenschiene (1) nach einem der vorhergehenden Ansprüche,
**dadurch gekennzeichnet, dass** die Grundkörper (34) der Leiter (3a, 3b) Rastnasen (33) aufweisen und die Isolierung (2) Stege (24) aufweist, die die Rastnasen (33) übergreifen können.

8. Phasenschiene (1) nach Anspruch 7,
**dadurch gekennzeichnet, dass** jede Rastnase (33) in der Verlängerung einer der Anschlussfahnen (30a, 30b) in der Richtung der Bodenwand (25) der Isolierung (2) liegt.

9. Phasenschiene (1) nach einem der vorhergehenden Ansprüche,
**dadurch gekennzeichnet, dass** in einem Querschnitt die Isolierung (2) Abschnitte (28) zur Ausrichtung der Leiter (3a, 3b) aufweist.

10. Phasenschiene (1) nach einem der vorhergehenden Ansprüche,
**dadurch gekennzeichnet, dass** die Isolierung (2) ein Profil ist.

11. Phasenschiene (1) nach einem der vorhergehenden Ansprüche,
**dadurch gekennzeichnet, dass** die Anschlussfahnen (30a, 30b) gebogen, insbesondere doppelt abgekröpft ausgebildet sind.

12. Phasenschiene (1) nach einem der vorhergehenden Ansprüche,
**dadurch gekennzeichnet, dass** das Kunststoffteil (4) einen Abstand zwischen zwei benachbarten Anschlussfahnen (30a, 30b) bestimmt.

13. Phasenschiene (1) nach einem der vorhergehenden Ansprüche,
**dadurch gekennzeichnet, dass** die Anschlussfahnen (30a, 30b) und das Kunststoffteil (4) so aufeinander abgeestimmt sind, dass an jeder Anschlussfahne (30a, 30b) eine Einspeisungsklemme berührungssicher eingesetzt werden kann.

14. Phasenschiene (1) nach einem der vorhergehenden Ansprüche,
**dadurch gekennzeichnet, dass** jede Anschlussfahne ein sich nach außen erstreckendes Ende (31) aufweist und die Anschlussfahnen (30a, 30b) im Kunststoffteil (4) so angeordnet sind, dass in einer Draufsicht die Enden (31) je zwei benachbarten Anschlussfahnen (30a, 30b) quer zur Längsrichtung zueinander versetzt angeordnet sind.

15. Phasenschiene (1) nach einem der vorhergehenden Ansprüche,
**dadurch gekennzeichnet, dass** in der Draufsicht die Enden (31) der Anschlussfahnen (30a) zumindest eines der Leiter (3a) außerhalb der Isolierung (2) liegen.

16. Phasenschiene (1) nach einem der vorhergehenden Ansprüche,
**dadurch gekennzeichnet, dass** das Kunststoffteil (4) ein Spritzgussteil ist.

17. Phasenschiene (1) nach einem der vorhergehenden Ansprüche,
**dadurch gekennzeichnet, dass** die Schiene (1) zwei Leiter (3a, 3b) aufweist, wobei ein erster Leiter (3a) ein Neutralleiter (n) mit N-Anschlussfahnen (30a) und ein zweiter Leiter (3b) ein Phasenleiter (p1, p2, p3) mit P-Anschlussfahnen (30b) ist.

18. Phasenschiene (1) nach einem der Ansprüche 1 bis 16,
**dadurch gekennzeichnet, dass** die Schiene (1) vier Leiter (3a, 3b) aufweist, wobei ein erster Leiter (3a) ein Neutralleiter (n) mit N-Anschlussfahnen (30a) ist und die anderen Leiter (3b) Phasenleiter (p1, p2, p3) mit P-Anschlussfahnen (30b) sind.

19. Phasenschiene (1) nach einem der vorhergehenden Ansprüche,
**dadurch gekennzeichnet, dass** in einem Längsschnitt eine erste Anschlussfahne (30a, 30b) eine N-Anschlussfahne (30a) ist.

20. Phasenschiene (1) nach einem der Ansprüche 1 bis 18,
**dadurch gekennzeichnet, dass** in dem Längsschnitt die erste Anschlussfahne (30a, 30b) eine P-Anschlussfahne (30b) ist.

## Claims

1. Phase busbar (1) having insulation (2) and at least two conductors (3a, 3b) which are arranged in the insulation (2) and have connecting tabs (30a, 30b), wherein the insulation (2) has a bottom wall (25) and separating walls (23) which separate the conductors (3a, 3b) from one another,
**characterised in that**
the conductor (3a, 3b) has moulded-on portions (32) which create a distance between the base body (34) of the conductors (3a, 3b) and the bottom wall (25) of the insulation (2).

2. Phase busbar (1) according to claim 1,
**characterised in that**
a first conductor (3a) is a neutral conductor (n) with N connecting tabs (30a) and a second conductor (3b) is a phase conductor (p1, p2, p3) with P connecting tabs (30b), wherein the N connecting tabs (3a) and the P connecting tabs (3b) can be formed in a longitudinal section on the left or right-hand side according to use.

3. Phase busbar (1) according to one of claims 1 or 2,
**characterised in that**
a plastic part (4) is arranged on the insulation (2), said plastic part (4) having moulded-on portions (40, 41) for receiving a section of each connecting tab (30a, 30b).

4. Phase busbar (1) according to one of the preceding claims,
**characterised in that**
the moulded-on portions (32) are formed as an extension of one of the respective connecting tabs (30a, 30b) in the direction of the bottom wall (25) of the insulation (2).

5. Phase busbar (1) according to one of the preceding claims,
**characterised in that**
the separating walls (23) have moulded-on portions (27) which create a distance between the conductors (3a, 3b) and a body (29) of the separating walls (23).

6. Phase busbar (1) according to claim 5,
**characterised in that**
the moulded-on portions (27) of the separating walls (23) are formed to be roof-like in a cross section.

7. Phase busbar (1) according to one of the preceding claims,
**characterised in that**
the base bodies (34) of the conductors (3a, 3b) have latching lugs (33) and the insulation (2) has webs (24) which can overlap the latching lugs (33).

8. Phase busbar (1) according to claim 7,
**characterised in that**
each latching lug (33) lies in the extension of one of the connecting tabs (30a, 30b) in the direction of the bottom wall (25) of the insulation (2).

9. Phase busbar (1) according to one of the preceding claims,
**characterised in that**,
in a cross section, the insulation (2) has sections (28) for aligning the conductors (3a, 3b).

10. Phase busbar (1) according to one of the preceding claims,
**characterised in that**
the insulation (2) is a profile.

11. Phase busbar (1) according to one of the preceding claims,
**characterised in that**
the connecting tabs (30a, 30b) are formed to be bent, in particular double cranked.

12. Phase busbar (1) according to one of the preceding claims,
**characterised in that**
the plastic part (4) determines a distance between two adjacent connecting tabs (30a, 30b).

13. Phase busbar (1) according to one of the preceding claims,
**characterised in that**
the connecting tabs (30a, 30b) and the plastic part (4) are adjusted with respect to one another in such a way that a power supply terminal can be used in a touch-proof manner on each connecting tab (30a, 30b).

14. Phase busbar (1) according to one of the preceding claims,
**characterised in that**
each connecting tab has an end (31) which extends outwards and the connecting tabs (30a, 30b) are arranged in the plastic part (4) in such a way that the ends (31) of each two adjacent connecting tabs (30a, 30b) are arranged to be offset with respect to each other transversely to the longitudinal direction in a top view.

15. Phase busbar (1) according to one of the preceding claims,
**characterised in that**
the ends (31) of the connecting tabs (30a) of at least one of the conductors (3a) lies outside the insulation (2) in the top view.

16. Phase busbar (1) according to one of the preceding claims,
**characterised in that**
the plastic part (4) is an injection-moulded part.

17. Phase busbar (1) according to one of the preceding claims,
**characterised in that**
the busbar (1) has two conductors (3a, 3b), wherein a first conductor (3a) is a neutral conductor (n) with N connecting tabs (30a) and a second conductor (3b) is a phase conductor (p1, p2, p3) with P connecting tabs (30b).

18. Phase busbar (1) according to one of claims 1 to 16,
**characterised in that**
the busbar (1) has four conductors (3a, 3b), wherein a first conductor (30a) is a neutral conductor (n) with N connecting tabs (30a) and the other conductors (3b) are a phase conductors (p1, p2, p3) with P connecting tabs (30b).

19. Phase busbar (1) according to one of the preceding claims,
**characterised in that**,
in a longitudinal section, a first connecting tab (30a, 30b) is an N connecting tab (30a).

20. Phase busbar (1) according to one of claims 1 to 18,
**characterised in that**,
in the longitudinal section, the first connecting tab (30a, 30b) is a P connecting tab (30b).

## Revendications

1. Barre de phase (1) comportant une isolation (2) et au moins deux conducteurs (3a, 3b) dans l'isolant (2) ainsi que des pattes de branchement (30a, 30b), l'isolant (2) ayant une paroi de fond (25) et des cloisons (23) séparant les conducteurs (3a, 3b) l'un de l'autre,
barre **caractérisée en ce que**
les conducteurs (3a, 3b) ont des déformations (32) qui réalisent l'écartement entre le corps de base (34) des conducteurs (3a, 3b) et la paroi de fond (25) de l'isolant (2).

2. Barre de phase (1) selon la revendication 1,
**caractérisée en ce qu'**
un premier conducteur (3a) est un conducteur de neutre (n) avec N pattes de branchement (30a) et un second conducteur (3b) est un conducteur de phase (p1, p2, p3) avec P pattes de branchement (30b), et en coupe longitudinale, les N pattes de branchement (3a) et les P pattes de branchement (3b) sont réalisées sur le côté gauche ou le côté droit selon l'application.

3. Barre de phase (1) selon l'une des revendications 1 ou 2,
**caractérisée en ce que**
l'isolation (2) comporte une pièce en matière plastique (4) munie de déformations (40, 41) pour recevoir un segment de chaque patte de branchement (30a, 30b).

4. Barre de phase (1) selon l'une des revendications précédentes,
**caractérisée en ce que**
les déformations (32) sont des prolongements de chacune des pattes de branchement (30a, 30b) en direction de la paroi de fond (25) de l'isolation (2).

5. Barre de phase (1) selon l'une des revendications précédentes,
**caractérisée en ce que**
les cloisons (23) ont des déformations (27) qui réalisent l'écartement entre les conducteurs (3a, 3b) et un corps (29) des cloisons (23).

6. Barre de phase (1) selon la revendication 5,
**caractérisée en ce qu'**
en section, les déformations (27) des cloisons (23) ont une forme de dièdre.

7. Barre de phase (1) selon l'une des revendications précédentes,
**caractérisée en ce que**
les corps de base (34) des conducteurs (3a, 3b) comportent des becs d'accrochage (33) et l'isolant (2) comporte des entretoises (24) pour chevaucher les becs d'accrochage (33).

8. Barre de phase (1) selon la revendication 7,
**caractérisée en ce que**
chaque bec d'accrochage (33) est dans le prolongement de l'une des pattes de branchement (30a, 30b) en direction de la paroi de fond (25) de l'isolant (2).

9. Barre de phase (1) selon l'une des revendications précédentes,
**caractérisée en ce qu'**
en section, l'isolant (2) a des segments (28) pour orienter les conducteurs (3a, 3b).

10. Barre de phase (1) selon l'une des revendications précédentes,
**caractérisée en ce que**
l'isolant (2) est un profilé.

11. Barre de phase (1) selon l'une des revendications précédentes,
**caractérisée en ce que**
les pattes de branchement (30a, 30b) sont cintrées, notamment recourbées deux fois.

12. Barre de phase (1) selon l'une des revendications précédentes,
**caractérisée en ce que**
la pièce en matière plastique (4) définit la distance entre deux pattes de branchement (30a, 30b) voisines.

13. Barre de phase (1) selon l'une des revendications précédentes,
**caractérisée en ce que**
les pattes de branchement (30a, 30b) et la pièce en matière plastique (4) sont accordées les unes par rapport aux autres pour que chaque patte de branchement (30a, 30b) puisse recevoir une cosse d'alimentation, sans risque de contact.

14. Barre de phase (1) selon l'une des revendications précédentes,
**caractérisée en ce que**
chaque patte de branchement a une extrémité (31) orientée vers l'extérieur et les pattes de branchement (30a, 30b) sont réalisées dans la pièce en matière plastique (4) pour qu'en vue de dessus, les extrémités (31) de chaque fois deux pattes de branchement voisines (30a, 30b) soient décalées l'une par rapport à l'autre dans la direction transversale à la direction longitudinale.

15. Barre de phase (1) selon l'une quelconque des revendications précédentes,
**caractérisée en ce qu'**
en vue de dessus, les extrémités (31) des pattes de branchement (30a) d'au moins l'un des conducteurs (3a) sont à l'extérieur de l'isolant (2).

16. Barre de phase (1) selon l'une quelconque des revendications précédentes,
**caractérisée en ce que**
la pièce en matière plastique (4) est une pièce injectée.

17. Barre de phase (1) selon l'une des revendications précédentes,
**caractérisée en ce que**
les barres (1) ont deux conducteurs (3a, 3b), un premier conducteur (3a) étant le conducteur neutre (n) avec N pattes de branchement (30a) et le second conducteur (3b) est un conducteur de phase (p1, p2, p3) avec P pattes de branchement (30b).

18. Barre de phase (1) selon l'une des revendications 1 à 16,
**caractérisée en ce que**
le rail (1) a quatre conducteurs (3a, 3b), un premier conducteur (3a) étant le conducteur neutre (n) avec N pattes de branchement (30a) et les autres conducteurs (3b) sont des conducteurs de phase (p1, p2, p3) avec chaque fois P pattes de branchement (30b).

19. Barre de phase (1) selon l'une quelconque des revendications précédentes,
**caractérisée en ce qu'**
en coupe longitudinale la première patte de branchement (30a, 30b) est une des N patte de branchement (30a).

20. Barre de phase (1) selon l'une des revendications 1 à 18,
**caractérisée en ce qu'**
en coupe longitudinale, la première patte de branchement (30a, 30b) est une des P pattes de branchement (30b).
